# EUROPÄISCHE PATENTSCHRIFT

(11) **EP 3 769 553 B1**
(45) Veröffentlichungstag und Bekanntmachung des Hinweises auf die Patenterteilung: **24.05.2023**
(21) Anmeldenummer: 19710316.1
(22) Anmeldetag: 27.02.2019
(51) Int. Cl.: H04W 12/00, H04W 4/02, H04W 4/80, H04W 12/06

(54) **VERFAHREN UND SYSTEM ZUR AUTORISIERUNG DER KOMMUNIKATION EINES NETZWERKKNOTENS**
METHOD AND SYSTEM FOR AUTHORISING THE COMMUNICATION OF A NETWORK NODE
PROCÉDÉ ET SYSTÈME D'AUTORISATION DE LA COMMUNICATION D'UN NOEUD DE RÉSEAU

(30) Priorität: 22.03.2018 DE 102018204370
(43) Veröffentlichungstag der Anmeldung: 27.01.2021
(73) Patentinhaber: Siemens Schweiz AG, 8047 Zürich (CH)
(72) Erfinder: FREY, Christian, 6314 Unterägeri (CH); KONRAD, Hilmar, 6340 Baar (CH)
(74) Vertreter: Siemens Patent Attorneys
(86) Internationale Anmeldenummer: PCT/EP2019/054844
(87) Internationale Veröffentlichungsnummer: WO 2019/179734

(56) Entgegenhaltungen:
- WO-A1-2016/183261
- CN-A- 107 613 544
- US-A1- 2013 054 033
- US-A1- 2016 323 283
- US-A1- 2018 063 681
- US-A1- 2018 077 576

## Beschreibung

Die Erfindung betrifft ein Verfahren und ein System zur Autorisierung der Kommunikation eines Netzwerkknotens eines Kommunikationsnetzwerkes. Weiterhin betrifft die Erfindung einen Netzwerkknoten eines Kommunikationsnetzwerkes.

Die Vernetzung von Gegenständen und Geräten untereinander und mit dem Internet durchdringt immer mehr den Alltag, sowohl im privaten als auch im industriellen Umfeld. Beim sogenannten Internet der Dinge bilden internetfähige Geräte (sog. IoT-Devices) ein Netzwerk, in dem sie über geeignete Kommunikationsverbindungen (z.B. WLAN) untereinander bzw. mit dem Internet kommunizieren.

Viele auf dem Markt vorhandene IoT-Geräte weisen wenige bis gar keine Sicherheitsmechanismen auf und enthalten teilweise diverse Schwachstellen und stellen damit eine potentielle Gefahr für deren Anwender und Dritte dar. Die Zahl böswilliger Attacken auf internetbasierte Systeme, Geräte und Anwendungen steigt derzeit sprunghaft an.

Die amerikanische Patentanmeldung US20180077576A1 offenbart Mechanismen für das AP-Management (Access-Point-Management), die das AP-Management über eine sichere Assoziation zwischen Access Points und mobilen Geräten ermöglichen, wobei Nutzer über Access Points Zugriff auf Netzwerkressourcen erhalten.

Die chinesische Patentanmeldung CN107613544A offenbart einen Router mit Nahfeldkommunikationschip für eine drahtlose Netzwerkverbindung, wobei der Nahfeldkommunikationschip zum Senden von Authentifizierungsinformationen an eine Netzwerkvorrichtung dient.

Die internationale Patentanmeldung WO2016183261A1 offenbart Verfahren zur Authentifizierung eines Benutzers, der den Zugriff auf eine oder mehrere Ressourcen über ein Gerät anfordert. Die Authentifizierung kann auf einer Vielzahl von Geräten basieren oder sich anderweitig auf diese stützen. Als Reaktion auf den Empfang einer Anforderung, auf eine oder mehrere Ressourcen zuzugreifen, kann z.B. ein erstes Gerät an ein zweites Gerät eine Anforderung zur Benutzereingabe eines Berechtigungsnachweises senden. Das erste Gerät kann einen Berechtigungsnachweis von dem zweiten Gerät empfangen, und das erste Gerät kann das erste Gerät für den Benutzer auf der Grundlage des empfangenen Berechtigungsnachweises authentifizieren.

Die amerikanische Patentanmeldung US20180063681A1 offenbart ein Verfahren und eine Vorrichtung zum Bestimmen von relativen Positionen unter einer Menge von Geräten, wobei ein Layout eines physikalischen Raums für jedes der Geräte abgerufen wird, wobei Ortsmerkmale der Geräte bestimmt werden, wobei die Ortsmerkmale relative Positionen der jeweiligen Geräte in Bezug auf eines oder mehrerer der Geräte umfassen; wobei die Geräte jeweils auf einen Ort innerhalb des physischen Raums, zumindest teilweise basierend auf den Ortsmerkmalen, abgebildet werden.

Die amerikanische Patentanmeldung US20160323283A1 offenbart ein Verfahren zum Betreiben eines Hubs, wobei der Hub eine Verbindungsanforderung (pairing request) von einem Internetder-Dinge-Gerät (loT-Gerät) erhält, wobei der Hub das Pairing mit dem loT-Gerät unter Verwendung einer Authentifizierungsverfahrens aus einer Vielzahl von vor-bestimmten Verbindungsauthentifizierungsverfahren durchführt.

Bekannt ist die Verwendung von proprietären Schnittstellen zu den verbauten Geräten durch Nutzung von Herstellerwerkzeugen, wie z.B. über eine Serviceschnittstelle. Bekannt ist weiterhin die Verwendung von Zertifikaten, um eine gesicherte Datenübertragung zwischen den IoT-Geräten und/oder einer Zentrale bzw. Serviceeinheit zu gewährleisten.

Proprietäre Schnittstellen sind unflexibel und erfordern zusätzliche Werkzeuge auf Seite eines Benutzers. Zertifikate können über Hackerangriffe von einem Zertifizierungsserver gestohlen und missbraucht werden. Dies häufig ohne Kenntnis des Betreibers der IoT-Infrastruktur bzw. eines Benutzers.

Es ist daher die Aufgabe der vorliegenden Erfindung ein Verfahren und ein System für einen benutzerfreundlichen und gesicherten Zugriff auf IoT-Geräte bereitzustellen.

Die gestellte Aufgabe wird mit den Merkmalen der unabhänigen Ansprüche gelöst. Weitere vorteilhafte Ausgestaltungen sind in den abhändigen Ansprüchen beschrieben.

Die Aufgabe wird gelöst durch ein Verfahren zur Autorisierung der Kommunikation (z.B. Datenverbindung z.B. für das Durchführen eines Downloads oder eines Uploads von Daten) eines Netzwerkknotens (z.B. IoT-Gerät) eines Kommunikationsnetzwerkes (z.B. IP-Netzwerk), wobei die Autorisierung zur Kommunikation des Netzwerkknotens nur dann erfolgt, wenn die geographische Position des Netzwerkknotens und die Position eines definierten, mit Vorteil zertifizierten mobilen Kommunikationsendgerätes (z.B. Smartphone) im Wesentlichen übereinstimmen. Eine Kommunikation umfasst z.B. das Empfangen oder das Senden von Daten, Dateien, Signalen, Befehlen, Parametern zu anderen Netzwerkknoten, zu einem Panel, zu einer Cloud oder zum mobilen Kommunikationsendgerät. Ein Netzwerkknoten (z.B. IoT-Gerät) ist nur dann autorisiert eine Kommunikation (z.B. ein Firmware Update oder ein Update von Betriebsparametern des I-oT-Geräts) durchzuführen, wenn ein definiertes mobiles Kommunikationsendgerät (z.B. ein mobiles Kommunikationsendgerät aus einer Menge von zertifizierten mobilen Kommunikationsendgeräten) sich geographisch in einem definierten maximalen Abstand zum entsprechenden Netzwerkknoten befindet. Bei dem definierten maximalen Abstand kann es sich z.B. um 5m, insbesondere 3m, handeln. Mit Vorteil erfolgt eine Autorisierung des Netzwerkknotens für eine Kommunikation erst nach einer Identifizierung des Benutzers des zertifizierten mobilen Kommunikationsendgerätes. Mit Vorteil erfolgt die Identifizierung des Benutzers im definierten maximalen Abstand zum Netzwerkknoten. Die Identifizierung des Benutzers kann biometrisch (z.B. Fingerabdruck), über eine PIN-Eingabe oder PKI (Public Key Infrastructure) erfolgen. Die geographische Position des Netzwercknotens kann im Netzwerkknoten hinterlegt sein, z.B. in einem Speicherbereich des Netzwerkknotens.

Mit Vorteil erfolgt eine Autorisierung des Netzwerkknotens für eine Kommunikation zusätzlich zur Überprüfung der Übereinstimmung der geographischen Position von Netzwerkknoten und mobilem Kommunikationsendgerät zusätzlich noch durch eine weitere Autorisierung des Netzwerkknotens (z.B. durch eine Freigabe durch eine Leitstelle, einen weiteren Knoten im Netzwerk oder durch die Anmeldung des Gerätes im IP-Netzwerk selbst (durch entsprechende Zugangsautorisierung)). Diese Zweifaktoren-Verifikation bzw. Zweifaktoren-Autorisierung bietet ein hohes Mass an Sicherheit für den Zugriff auf den Netzwerkknoten. Bei der Zweifaktoren-Verifikation bzw. Zweifaktoren-Autorisierung erfolgt mit Vorteil eine erste Verifikation bzw. Autorisierung durch den IP-Zugriff selbst (virtuelle Komponente). Eine zweite Verifikation bzw. Autorisierung erfolgt über eine physische Komponente (Überprüfung auf Übereinstimmung der geographischen Position/Standort der Geräte). Erst wenn erste und zweite Verifikation bzw. Autorisierung erfolgt sind, kann die Datenübermittlung für den Netzwerkknoten aktiviert werden. Mit Vorteil wird der physische Zugang zum Netzwerkknoten (z.B. IoT-Gerät in einem Gebäude) durch ein Zutrittskontrollsystem gesichert werden. Dies würde eine Dreifaktoren-Verifikation bzw. Dreifaktoren-Autorisierung bedeuten.

Mit Vorteil wird das erfindungsgemässe Verfahren für die Installation und/oder für die Wartung von Netzwerkknoten in einem Gebäude bzw. innerhalb einer Gebäudeautomatisierung verwendet. Netzwerkknoten können z.B. IoT-Geräte sein, oder Gefahren- und/oder Brandmelder, Controller für Sensoren und/oder Aktoren, Stellantriebe oder Busteilnehmer eines Installationsbuses (z.B. KNX-Bus).

Eine erste vorteilhafte Ausgestaltung der Erfindung liegt darin, dass die Position des Netzwerkknotens in einem Gebäudemodell auf einem Server hinterlegt ist, und wobei die Position des mobilen Kommunikationsendgerätes über ein Positionsbestimmungssystem ermittelt wird. Mit Vorteil handelt es sich beim Positionsbestimmungssystem um ein Indoor-Positionsbestimmungssystem. Das Indoor-Positionsbestimmungssystem kann z.B. auf WLAN-Technologie basiert sein (unter Verwendung von WiFi-Access Points) oder auf Bluetooth-Technologie (z.B. BLE). Prinzipiell kann aber auch ein satellitengestütztes Positionsbestimmungssystem (z.B. GPS) verwendet werden.

Mit Vorteil befinden sich der Netzwerkknoten und der Server im selben Netzwerk (z.B. ein IP-Netzwerk, basierend auf IPv4 oder IPv6). Mit Vorteil handelt es sich beim Gebäudemodell um ein Gebäudeinformationsmodell (BIM, Building Information Model). Im Gebäudeinformationsmodell (BIM) sind alle relevanten Daten für ein Gebäude und für die verbaute Infrastruktur (Heizung, Lüftung, Klima, Sicherheit, Brandschutz, etc.) des Gebäudes hinterlegt. So sind im Gebäudeinformationsmodell (BIM) z.B. Informationen über die im Gebäude installierten Brandmelder (Typ, Hersteller, Baujahr, Position, etc.) hinterlegt. Das Gebäudeinformationsmodell (BIM) kann z.B. auf IFC (Industry Foundation Classes) beruhen.

Eine weitere vorteilhafte Ausgestaltung der Erfindung liegt darin, dass die Überprüfung der Position auf dem Server erfolgt. Der Server kann die Position des Netzwerkknotens aus dem Gebäudeinformationsmodell (BIM) entnehmen. Das Gebäudeinformationsmodell (BIM) kann dabei in einer Datenbank hinterlegt sein, auf die der Server Zugriff hat. Mit Vorteil befindet sich das Gebäudeinformationsmodell (BIM) in einer In-Memory-Datenbank (z.B. Hana).

Wenn die geographische Position des Netzwerkknotens in einem Speicherbereich (z.B. Flash Speicher) des Netzwerkknotens hinterlegt ist, kann der Server aber auch die geographische Position des Netzwerkknotens vom Netzwerkknoten selbst abfragen. Mit Vorteil befinden sich dabei der Server und der Netzwercknoten im selben Netzwerk. Der Server kann sich aber auch in einer Cloud-Infrastruktur befinden und über geeignete Kommunikationsmechanismen (z.B. Funk) mit dem Netzwerkknoten und mit dem mobilen Kommunikationsgerät (z.B. Smartphone) kommunizieren. Mit Vorteil handelt es sich beim Server und beim mobilen Kommunikationsgerät um vertrauenswürdige Geräte (trusted devices) .

Eine weitere vorteilhafte Ausgestaltung der Erfindung liegt darin, dass der Netzwerkknoten dazu eingerichtet ist, dass die Überprüfung der Position im oder durch den Netzwerkknoten erfolgt. Die geographische Position des Netzwerkknotens ist in einem Speicherbereich (z.B. Flash Speicher) des Netzwerkknotens hinterlegt. Wenn der Netzwerkknoten geeignete und ausreichende Verarbeitungslogik (bzw. Rechenleistung umfasst) und geeignete Kommunikationsmechanismen (z.B. Funk) umfasst, kann der Vergleich der Position des Netzwerkknoten mit der Position des mobilen Kommunikationsendgerätes im oder durch den Netzwerkknoten erfolgen. Mit Vorteil handelt es sich beim Netzwerkknoten und beim mobilen Kommunikationsgerät um vertrauenswürdige Geräte (trusted devices).

Eine weitere vorteilhafte Ausgestaltung der Erfindung liegt darin, dass das mobile Kommunikationsendgerät dazu eingerichtet ist, dass die Überprüfung der Position im mobilen Kommunikationsendgerät erfolgt. Die geographische Position des Netzwerkknotens kann im Netzwerkknoten (z.B. in einem entsprechenden Speicher des Netzwerkknotens) und/oder im Gebäudeinformationsmodell (BIM) hinterlegt sein, auf das der Server Zugriff hat. Über geeignete Kommunikationsmechanismen (z.B. Funk) erhält das mobile Kommunikationsendgerät die geographische Position des Netzwerkknotens und vergleicht diese mit der eigenen geographischen Position. Heutige mobile Kommunikationsendgeräte (z.B. Smartphones) sind eingerichtet, dass sie ihre jeweilige geographische Position bestimmen können. Dies kann z.B. über ein satellitengestütztes Positionsbestimmungssystem (z.B. GPS) und/oder ein in einem Gebäude installiertes Indoor-Positionsbestimmungssystem (z.B. WLAN, Bluetooth (insbesondere Bluetooth Low Energy(BLE), iBeacons) erfolgen. Stimmt die Position des mobilen Kommunikationsendgerätes mit der Position des Netzwerkknotens überein, kann das mobile Kommunikationsendgerät dem Netzwerkknoten eine Autorisierung zur Kommunikation (z.B. Firmware-Upload) übermitteln (z.B. Freischaltsignal, Approval-Meldung). Mit Vorteil handelt es sich beim Netzwerkknoten, beim mobilen Kommunikationsgerät und beim Server um vertrauenswürdige Geräte (trusted devices).

Eine weitere vorteilhafte Ausgestaltung der Erfindung liegt darin, dass das mobile Kommunikationsendgerät zur Überprüfung der Position dazu eingerichtet ist, dass die Überprüfung der Position von Netzwerkknoten und mobilen Kommunikationsendgerät über eine NFC-Verbindung zwischen dem Netzwerkknoten und dem mobilen Kommunikationsendgerät erfolgt. Eine Nahfeldkommunikation (Near Field Communication, NFC) zwischen dem mobilen Kommunikationsendgerät und dem Netzwerkknoten kann z.B. über RFID (Radio Frequency Identification) oder durch Bluetooth hergestellt werden. Eine Nahfeldkommunikation erfordert, dass die beiden zu verbindenden Geräte räumlich nahe (z.B. 2-3m) beieinander sind. Wenn das mobile Kommunikationsendgerät und der Netzwerkknoten eine NFC-Verbindung untereinander installiert haben, kann dies als Nachweis angesehen werden, dass ihre jeweilige geographische Position im Wesentlichen (z.B. im Abstand von 2-3m) übereinstimmt.

Eine weitere vorteilhafte Ausgestaltung der Erfindung liegt darin, dass während der Dauer einer Kommunikation die Position des Netzwerkknotens und die Position des mobilen Kommunikationsendgerätes im Wesentlichen übereinstimmen. Dies erhöht weiterhin die Sicherheit des Zugriffs auf den Netzwerkknoten und die Sicherheit der Kommunikation mit dem Netzwerkknoten. Das mobile Kommunikationsendgerät muss z.B. für die gesamte Dauer eines Firmware-Updates sich im Wesentlichen (z.B. in einem Abstand von 2-3m) in der Nähe des Netzwerkknotens befinden.

Eine weitere vorteilhafte Ausgestaltung der Erfindung liegt darin, dass das mobile Kommunikationsendgerät eine Zertifizierung, d.h. eine Zertifizierung zur Autorisierung durch einen Zertifizierungsserver (z.B. vertrauenswürdiger Server) erhält. Ein Zertifizierungsserver kann z.B. über ein geeignetes asymmetrisches Verschlüsselungsverfahren digitale Zertifikate erstellen und diese auf mobile Kommunikationsendgeräte übertragen. Mit Vorteil ist ein digitales Zertifikat nur für eine bestimmte Zeitspanne und/oder für eine definierte Anzahl von Autorisierungen und/oder für definierte Netzwerkknoten (z.B. Netzwerkknoten in einem bestimmten Gebäudebereich (z.B. ein bestimmter Raum) gültig. Dies erhöht weiterhin die Sicherheit des Zugriffs auf den Netzwerkknoten und die Sicherheit der Kommunikation mit dem Netzwerkknoten.

Eine weitere vorteilhafte Ausgestaltung der Erfindung liegt darin, dass nur nach einer erfolgten Autorisierung ein Schreibzugriff auf einen Speicher des autorisierten Netzwercknotens erlaubt wird. Der Schreibzugriff kann z.B. über weitere Netzwerkknoten, über das mobile Kommunikationsendgerät oder über einen Server erfolgen. Mit Vorteil befindet sich der Server in einer Cloud-Infrastruktur und ist für eine Kommunikation mit dem Netzwerkknoten entsprechend eingerichtet.

Die Aufgabe wird weiterhin gelöst durch ein System zur Autorisierung der Kommunikation (z.B. Datenverbindung) eines Netzwerkknotens (z.B. IoT-Gerät) eines Kommunikationsnetzwerkes (z.B. IP-Netzwerk), wobei der Netzwerkknoten dazu eingerichtet ist, dass eine Autorisierung zur Kommunikation des Netzwercknotens nur dann erfolgt, wenn die geographische Position des Netzwerkknotens und die Position eines definierten (mit Vorteil zertifizierten) mobilen Kommunikationsendgerätes (z.B. Smartphone) im Wesentlichen übereinstimmen. Eine Kommunikation umfasst z.B. das Empfangen oder das Senden von Daten, Dateien, Signalen, Befehlen, Parametern zu anderen Netzwerkknoten, zu einem Panel, zu einer Cloud oder zum mobilen Kommunikationsendgerät. Ein Netzwerkknoten (z.B. IoT-Gerät) ist nur dann autorisiert eine Kommunikation (z.B. ein Firmware Update) durchzuführen, wenn ein definiertes mobiles Kommunikationsendgerät (z.B. ein mobiles Kommunikationsendgerät aus einer Menge von zertifizierten mobilen Kommunikationsendgeräten) sich geographisch in einem definierten maximalen Abstand zum entsprechenden Netzwerkknoten befindet. Bei dem definierten maximalen Abstand kann es sich z.B. um einen Abstand von 5m, insbesondere 3m, handeln. Mit Vorteil erfolgt eine Autorisierung des Netzwerkknotens für eine Kommunikation erst nach einer Identifizierung des Benutzers des zertifizierten mobilen Kommunikationsendgerätes. Mit Vorteil erfolgt die Identifizierung des Benutzers in dem definierten maximalen Abstand zum Netzwerkknoten. Die Identifizierung des Benutzers kann biometrisch (z.B. Fingerabdruck), über eine PIN-Eingabe oder PKI (Public Key Infrastructure) erfolgen. Die geographische Position des Netzwerkknotens kann im Netzwerkknoten hinterlegt sein, z.B. in einem Speicherbereich des Netzwerkknotens.

Mit Vorteil erfolgt eine Autorisierung des Netzwerkknotens für eine Kommunikation zusätzlich zur Überprüfung der Übereinstimmung der geographischen Position von Netzwerkknoten und mobilem Kommunikationsendgerät noch durch eine weitere Autorisierung des Netzwerkknotens (z.B. durch eine Freigabe durch eine Leitstelle oder einen weiteren Knoten im Netzwerk). Diese Zweifaktoren-Verifikation bzw. Zweifaktoren-Autorisierung bietet ein hohes Mass an Sicherheit für den Zugriff auf den Netzwerkknoten. Bei der Zweifaktoren-Verifikation bzw. Zweifaktoren-Autorisierung erfolgt mit Vorteil eine erste Verifikation bzw. Autorisierung durch den IP-Zugriff selbst (virtuelle Komponente). Eine zweite Verifikation bzw. Autorisierung erfolgt über eine physische Komponente (Überprüfung auf Übereinstimmung der geographischen Position/Standort der Geräte). Erst wenn erste und zweite Verifikation bzw. Autorisierung erfolgt sind, kann die Datenübermittlung für den Netzwerkknoten aktiviert werden. Mit Vorteil wird der physische Zugang zum Netzwerkknoten (z.B. IoT-Gerät in einem Gebäude) durch ein Zutrittskontrollsystem gesichert werden. Dies würde eine Dreifaktoren-Verifikation bzw. Dreifaktoren-Autorisierung bedeuten und die Sicherheit erhöhen. Das System kann durch sowieso in einem Gebäude befindliche Infrastruktur realisiert werden.

Netzwerkknoten können z.B. IoT-Geräte sein, oder Gefahren- und/oder Brandmelder, Controller für Sensoren und/oder Aktoren, oder Busteilnehmer eines Installationsbuses (z.B. KNX-Bus) .

Eine weitere vorteilhafte Ausgestaltung der Erfindung liegt darin, dass das System weiter umfasst:
einen Server auf dem ein Gebäudemodell (BIM) mit der Position des Netzwerkknotens hinterlegt ist; und ein Positionsbestimmungssystem zur Bestimmung der Position des mobilen Kommunikationsendgerätes. Beim Server handelt es sich mit Vorteil um einen netzfähigen (z.B. IP-Netz, Internet) Datenbankserver auf den von Clients zugegriffen werden kann. Das Gebäudemodell (BIM, Building Information Model) befindet sich z.B. in einer In-Memory Datenbank (z.B. Hana) des Servers. Beim Positionsbestimmungssystem kann es sich z.B. um ein satellitengestütztes Positionsbestimmungssystem handeln und/oder um ein Indoor- Positionsbestimmungssystem (z.B. iBeacons). Mobile Kommunikationsendgeräte (z.B. Smartphones) sind heutzutage eingerichtet ihre geographische Position in Kooperation mit Positionsbestimmungssystemen zu bestimmen.

Eine weitere vorteilhafte Ausgestaltung der Erfindung liegt darin, dass der Netzwerkknoten und/oder der Server und/oder das mobile Kommunikationsendgerät für die Überprüfung der Positionen eingerichtet sind. Je nach Anwendungsfall bzw. vorhandener Infrastruktur kann somit flexibel ein entsprechendes System realisiert werden.

Eine weitere vorteilhafte Ausgestaltung der Erfindung liegt darin, dass der Netzwerkknoten nach erfolgter Autorisierung dazu eingerichtet ist, einen Schreibzugriff auf einen Speicher dieses autorisierten Netzwerkknotens (z.B. über weitere Netzwerkknoten, den Server oder über das mobile Kommunikationsendgerätes) zu erlauben. Mit Vorteil befindet sich der Server in einer Cloud-Infrastruktur und ist für eine Kommunikation mit dem Netzwerkknoten entsprechend eingerichtet.

Die Aufgabe wird weiterhin gelöst durch einen Netzwerkknoten eines Kommunikationsnetzwerkes (z.B. IP-Netzwerk), wobei der Netzwerkknoten dazu eingerichtet ist, dass er eine Kommunikation nur durchführen kann, wenn die Position des Netzwerkknotens und die Position eines definierten (zertifizierten) mobilen Kommunikationsendgerätes (z.B. Smartphone) im Wesentlichen übereinstimmen (z.B. in einem Abstand 3-5m). Entsprechend eingerichtete Netzwerkknoten weisen einen hohen Schutz vor einem unberechtigten Zugriff auf. Netzwerkknoten können z.B. IoT-Geräte sein, oder Gefahren- und/oder Brandmelder, Controller für Sensoren und/oder Aktoren, oder Busteilnehmer eines Installationsbuses (z.B. KNX-Bus).

Eine weitere vorteilhafte Ausgestaltung der Erfindung liegt darin, dass es sich beim Netzwerkknoten um ein IoT-Gerät handelt. Bei einem IoT-Gerät (IoT steht für Internet of Things, Internet der Dinge) handelt sich um physische und/oder virtuelle Gegenstände, die untereinander und/oder mit dem Internet verbunden sind. Je nach Ausstattung (Hardware, Software, Prozessor, Speicher) können IoT-Geräte unterschiedlich leistungsfähig sein.

Eine weitere vorteilhafte Ausgestaltung der Erfindung liegt darin, dass der Netzwerkknoten nach erfolgter Autorisierung dazu eingerichtet ist, einen Schreibzugriff auf einen Speicher dieses autorisierten Netzwerkknotens (z.B. über weitere Netzwerkknoten, über den Server oder über das mobile Kommunikationsendgerätes) zu erlauben. Dadurch ist u.a. ein hoher Schutz von Hackerangriffen oder Man-in-the-Middle-Attacken (MITM-Angriff, Mittelsmannangriff) auf den Netzwerkknoten sichergestellt.

Die Erfindung sowie vorteilhafte Ausführungen der vorliegenden Erfindung werden am Beispiel der nachfolgenden Figuren erläutert. Dabei zeigen:
FIG 1 ein erstes beispielhaftes System zur Autorisierung der Kommunikation eines Netzwerkknotens eines Kommunikationsnetzwerkes,
FIG 2 ein zweites beispielhaftes System zur Autorisierung der Kommunikation eines Netzwerkknotens eines Kommunikationsnetzwerkes, und
FIG 3 ein beispielhaftes Flussdiagramm für ein Verfahren Autorisierung der Kommunikation eines Netzwerkknotens eines Kommunikationsnetzwerkes.

Damit IoT-Geräte (z.B. Internetfähige Geräte) in Institutionen eingesetzt werden können, müssen sie ein Minimum an Sicherheitskriterien erfüllen. Die Geräte müssen Update-Funktionen besitzen, und der Hersteller muss einen Update-Prozess anbieten. Wenn IoT-Lösungen (Lösungen zum Internet der Dinge) ein unzureichendes oder fehlendes Patch-Management (Behebung von Fehlern) mitbringen, können keine Schwachstellen behoben werden. Ersatzweise müssten die Sicherheitslücken anderweitig abgeschirmt werden. Dies kann sehr aufwendig werden und auch das ganze Nutzungskonzept eines IoT-Gerätes ad absurdum führen.

Bei der vorliegenden Erfindung geht es insbesondere um den gesicherten/autorisierten Zugriff auf im Gebäude verbaute sicherheitsrelevante Geräte, wie z.B. Rauchmelder, Alarming Devices, Stellantriebe für Rauchklappen, Löschventile etc. Denn sind ist die Datensicherheit gefährdet, hemmt das den technische Fortschritt.

Mit der Verbreitung und dem Einzug der IoT-Technologie auch im Gebäudesektor, besteht ein erhöhtes Sicherheitsrisiko zur Manipulation der verbauten sicherheitsrelevanten Infrastruktur. So kann das bewusste Auslösen eines Fehlalarms zu einer Evakuierung eines Hotels führen, was negative Folgen für das Hotel und für die Hotelbesucher zur Folge hat, wie z.B. Unfälle in Panik. Unter anderem kann das zu Lösegeldforderungen führen. Auch der Einsatzzweck kann durch nicht verifizierbare Veränderungen an den Geräten kompromittiert werden (Alarmauslösung eines Rauchmelders unterdrücken).

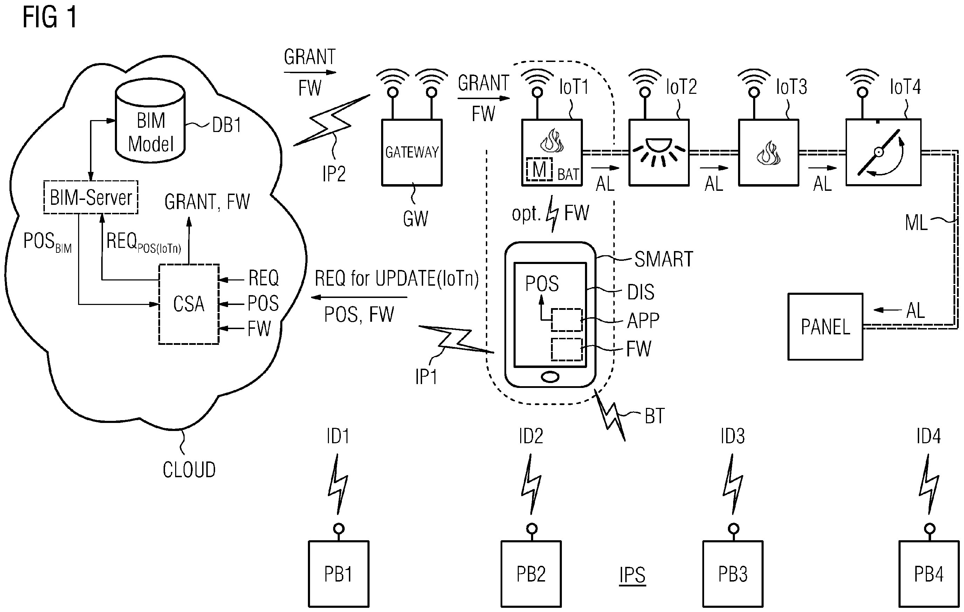

Figur 1 zeigt ein erstes beispielhaftes System zur Autorisierung der Kommunikation (z.B. Datenverbindung, Datenaustausch, Download oder Upload von Daten oder Parametern) eines Netzwerkknotens IoT1 - IoT4 (z.B. IoT-Gerät) eines Kommunikationsnetzwerkes IP2 (z.B. IP-Netzwerk), wobei der Netzwerkknoten IoT1 - IoT4 dazu eingerichtet ist, dass eine Autorisierung zur Kommunikation des Netzwerkknotens IoT1 - IoT4 nur dann erfolgt, wenn die geographische Position POS_{BIM} des Netzwerkknotens IoT1 - IoT4 und die Position POS eines definierten (mit Vorteil zertifizierten) mobilen Kommunikationsendgerätes SMART (z.B. Smartphone) im Wesentlichen übereinstimmen. Ein Netzwerkknoten IoT1 - IoT4 kann nur dann mit anderen Netzwerkknoten IoT1 - IoT4 oder Geräten (z.B. mobilen Kommunikationsendgeräten) kommunizieren, wenn sich ein mobiles Kommunikationsendgerät SMART (z.B. Smartphone, Tablet-Computer, PDA (Personal Digital Assistant) in unmittelbarer Nähe (z.B. in einem Abstand von höchstens 3 - 5m, insbesondere höchstens 3m) befindet.

Beim Kommunikationsnetzwerk IP2 handelt es sich z.B. um ein IP-Netzwerk, das auf einem IP-Protokoll (Internet Protocol, z.B. IPv4 oder IPv6) basiert.

Beim einem Netzwerkknoten IoT1 - IoT4 handelt es sich mit Vorteil um ein internetfähiges IoT-Gerät. In Gebäuden z.B. um entsprechend eingerichtete Gefahren- oder Brandmelder, oder entsprechend eingerichtete Bedien- und Überwachungsstationen PANEL.

Mit Vorteil umfasst das beispielhafte System nach Figur 1 einen Server BIM-Server, auf dem ein Gebäudemodell (BIM Model) mit der Position POS_{BIM} des Netzwerkknotens hinterlegt ist; und ein Positionsbestimmungssystem IPS zur Bestimmung der Position POS des mobilen Kommunikationsendgerätes SMART.

Beim Server (BIM-Server) handelt es sich um einen entsprechend eingerichteten Computer mit entsprechender Hardware und Software (Prozessor, Speicher, Schnittstellen, Kommunikationsmechanismen (z.B. Funk)). Das Gebäudemodell (BIM Model) ist z.B. auf einer Datenbank DB1 hinterlegt, auf das der Server (BIM-Server) zugreifen kann.

Beim Positionsbestimmungssystem IPS kann es sich um ein Satelliten gestütztes Positionsbestimmungssystem handeln (z.B. GPS) und/oder um ein Indoor-Positionsbestimmungssystem, das z.B. auf WLAN oder Bluetooth BT basiert.

Der Abgleich der Position des Netzwerkknotens IoT1 - IoT4 und der Position des mobilen Kommunikationsendgerätes kann durch den Netzwerkknoten IoT1 - IoT4, durch den Server (BIM-Server) oder durch das mobile Kommunikationsendgerät SMART erfolgen. Dazu sind der Netzwerkknoten IoT1 - IoT4, der Server (BIM-Server) und das mobile Kommunikationsendgerät SMART mit entsprechender Verarbeitungslogik ausgestattet.

Mit Vorteil ist der Netzwerkknoten IoT1 - IoT4 dazu eingerichtet, dass nach erfolgter Autorisierung ein Schreibzugriff auf einen Speicher M (z.B. Flash-Speicher) des autorisierten Netzwerkknotens möglich ist. Der Schreibzugriff kann z.B. durch weitere Netzwerkknoten des IP-Netzwerkes IP2 erfolgen, und/oder über das mobile Kommunikationsendgerät SMART, und/oder durch den Server (BIM-Server). Beim Schreibzugriff kann es sich z.B. um ein Firmware-Update oder um ein Update von Betriebsparametern des IoT-Geräts handeln.

Beim beispielhaften System gemäss Figur 1 ist ein Netzwerkknoten IoT1 - IoT4, PANEL dazu eingerichtet, dass er eine Kommunikation nur durchführen kann, wenn die Position POS_{BIM} des Netzwerkknotens IoT1 - IoT4 und die Position POS eines definierten (mit Vorteil zertifizierten) mobilen Kommunikationsendgerätes SMART (z.B. Smartphone) im Wesentlichen übereinstimmen, d.h. wenn sich beide Geräte in unmittelbarer Nähe befinden (z.B. innerhalb eines Abstandes von höchstens 3-5m). Mit Vorteil handelt es sich beim Netzwerkknoten IoT1 - IoT4, PANEL um ein IoT-Gerät, das über eine IP-Verbindung IP2 mit anderen Geräten bzw. mit dem Internet verbunden ist.

Im beispielhaften System gemäss Figur 1 erhält das IoT-Gerät IoT1 erst dann eine Autorisierung GRANT für eine Kommunikation (z.B. Firmware-Update FW), wenn sich das mobile Kommunikationsendgerät SMART in unmittelbarer räumlicher Nähe (z.B. innerhalb eines Abstandes von 5m, insbesondere 3m) des Gerätes IoT1 befindet. In der Darstellung gemäss Figur 1 ist die räumlichen Nähe durch die gestrichelte Linie dargestellt, innerhalb derer sich das mobile Kommunikationsendgerät SMART und das IoT-Gerät IoT1 befinden.

In der Darstellung gemäss Figur 1 wird das Positionsbestimmungssystem IPS durch Positioning Beacons PB1 - PB4 gebildet, die jeweils ihre jeweilige Identifikation ID1 - ID4 aussenden. Die jeweilige ID1 - ID4 wird vom mobilen Kommunikationsendgerät SMART erfasst, z.B. über eine Bluetooth BT Verbindung (mit Vorteil BLE, Bluetooth Low Energy). Basierend auf der jeweiligen, vom mobilen Kommunikationsendgerät SMART empfangenen Identifikation ID1 - ID4, bestimmt das mobile Kommunikationsendgerät SMART seine jeweilige geographische Position POS. Die Identifikation ID1 - ID4 kann auch direkt die geographische Ortsposition des jeweiligen Beacons PB1 - PB4 enthalten.

Das mobile Kommunikationsendgerät SMART umfasst eine entsprechende App APP zur Positionsbestimmung sowie Firmware FW, die auf das Gerät IoT1 hochgeladen (Upload) werden soll. Auf dem Display DIS des mobilen Kommunikationsendgerätes SMART kann ein Benutzer (z.B. ein Inbetriebsetzer oder ein Wartungstechniker) entsprechende Bedieneingaben durchführen.

Das mobile Kommunikationsendgerät SMART sendet über eine entsprechende IP-Verbindung IP1 (Internet Protokoll Verbindung) eine Anforderung (Request) REQ für ein Update für das entsprechende Gerät IoTn an eine Cloud Service Application CSA, die durch eine Cloud-Infrastruktur CLOUD realisiert ist. Die Cloud Service Application CSA erhält den Request REQ, die geografische Ortsposition POS des mobilen Kommunikationsendgerät SMART und die Firmware FW, die auf das entsprechende Gerät IoTn geladen werden soll.

Die Cloud Service Application CSA sendet eine Anforderung REQ_{POS(IoTn)} an den BIM-Server, um die Position des entsprechenden Gerätes IoTn, für das das Firmware-Update erfolgen soll, zu erhalten. Der BIM-Server greift auf die Datenbank DB1 mit dem Gebäudemodell (BIM) zu und stellt der Cloud Service Application CSA die Position POS_{BIM} des entsprechenden Gerätes IoTn zur Verfügung.

Die Cloud Service Application CSA vergleicht die Ortsposition POS des mobilen Kommunikationsendgerätes SMART mit der vom BIM-Server gelieferten Position POS_{BIM} des entsprechenden Gerätes IoTn, auf das das Firmware-Update FW erfolgen soll. Stimmen die beiden Positionen im Wesentlichen überein, gibt die Cloud Service Application CSA eine Bewilligung bzw. Autorisierung GRANT für eine Kommunikation über die IP-Verbindung IP2 an das entsprechende Gerät IoTn. Die Cloud Service Application CSA kann über ein Gateway GW auf das IP-Netz für die IP-Verbindung IP2 zugreifen oder aber auch direkt auf das entsprechende IoT-Gerät IoT1 - IoT4.

Das Firmware-Update FW bzw. der Firmware-Upload kann auf das entsprechende IoT-Gerät IoT1 - IoT4 (in der beispielhaften Darstellung gemäss Figur 1 das Gerät IoT1) von der Cloud-Infrastruktur CLOUD erfolgen, über die IP-Verbindung IP2 oder vom mobilen Kommunikationsendgerät SMART auf das IoT-Gerät I-oT1, z.B. durch eine NFC-Verbindung (Nahfeldkommunikation, Near Field Communication) zwischen dem mobilen Kommunikationsendgerät SMART und dem IoT-Gerät IoT1. Eine NFC-Verbindung (Nahfeldkommunikation, Near Field Communication) zwischen dem mobilen Kommunikationsendgerät SMART und dem IoT-Gerät IoT1 kann z.B. über Bluetooth oder RFID (Radio Frequency Identification) erfolgen.

Die Cloud Service Application CSA und der BIM-Server können physikalisch in einem Computer realisiert sein. Bei den IP-Verbindungen IP1, IP2 handelt es sich mit Vorteil um funkbasierte Verbindungen (z.B. WLAN).

Bei der beispielhaften Darstellung gemäss Figur 1 ist das IoT-Gerät IoT1 ein Brandmelder, der mit anderen Geräten IoT1 - I-oT4 über eine Melderlinie ML mit einer entsprechenden Kontrollstation oder Brandmeldezentrale PANEL (z.B. FS20-Zentrale) verbunden ist. Eine Alarmmeldung AL kann somit über die Melderlinie ML von einem Gerät IoT1 - IoT4 bis zur Zentrale PANEL weitergeleitet werden.

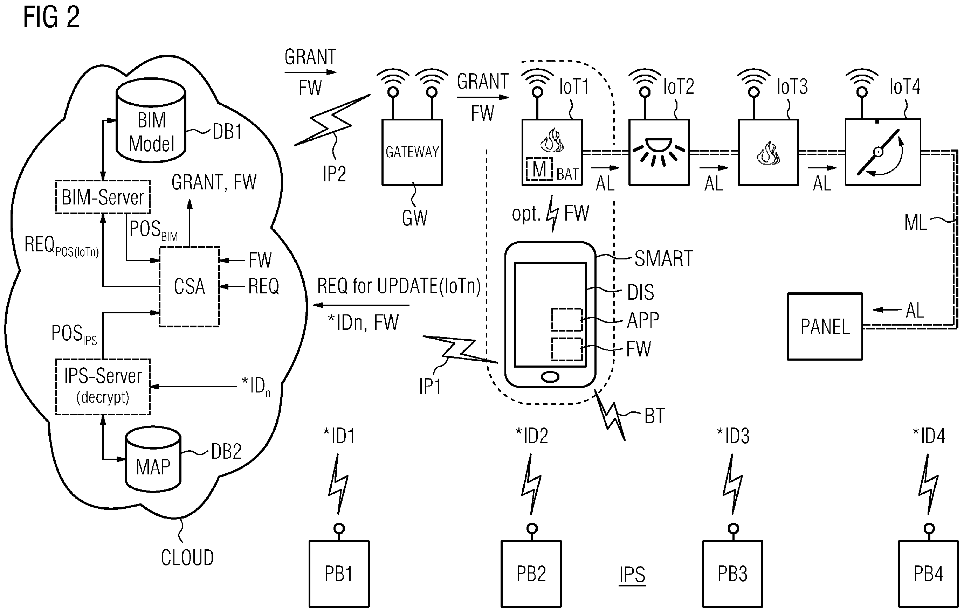

Figur 2 zeigt ein zweites beispielhaftes System zur Autorisierung der Kommunikation (z.B. Datenverbindung, Datenaustausch, Download oder Upload von Daten oder Parametern) eines Netzwerknotens IoT1 - IoT4 (z.B. IoT-Gerät) eines Kommunikationsnetzwerkes (z.B. IP-Netzwerk), wobei der Netzwerkknoten IoT1 - IoT4 dazu eingerichtet ist, dass eine Autorisierung zur Kommunikation des Netzwerkknotens IoT1 - IoT4 nur dann erfolgt, wenn die geographische Position POS_{BIM} des Netzwerkknotens IoT1 - IoT4 und die Position POS_{IPS} eines definierten (mit Vorteil zertifizierten) mobilen Kommunikationsendgerätes SMART (z.B. Smartphone) im Wesentlichen übereinstimmen. Ein Netzwerkknoten IoT1 - IoT4 kann nur dann mit anderen Netzwerkknoten IoT1 - IoT4 oder Geräten (z.B. mobilen Kommunikationsendgeräten) kommunizieren, wenn sich ein mobiles Kommunikationsendgerät SMART (z.B. Smartphone, Tablet-Computer, PDA (Personal Digital Assistant) in unmittelbarer Nähe (z.B. in einem Abstand von höchstens 5m, insbesondere höchstens 3m) befindet.

Beim Kommunikationsnetzwerk handelt es sich z.B. um ein IP-Netzwerk, das auf einem IP-Protokoll (Internet Protocol, z.B. IPv4 oder IPv6) basiert.

Beim einem Netzwerkknoten IoT1 - IoT4 handelt es sich mit Vorteil um ein Internetfähiges IoT-Gerät. In Gebäuden z.B. um entsprechend eingerichtete Gefahren- oder Brandmelder, oder entsprechend eingerichtete Bedien- und Überwachungsstationen PANEL.

Mit Vorteil umfasst das beispielhafte System nach Figur 2 einen Server BIM-Server, auf dem ein Gebäudemodell (BIM Model) mit der Position POS_{BIM} des Netzwerkknotens hinterlegt ist; und ein Positionsbestimmungssystem IPS zur Bestimmung der Position POS_{IPS} des mobilen Kommunikationsendgerätes SMART.

Beim Server (BIM-Server) handelt es sich um einen entsprechend eingerichteten Computer mit entsprechender Hardware und Software (Prozessor, Speicher, Schnittstellen, Kommunikationsmechanismen (z.B. Funk)). Das Gebäudemodell (BIM Model) ist z.B. auf einer Datenbank DB1 hinterlegt, auf das der Server (BIM-Server) zugreifen kann. Das Gebäudemodell (BIM Model) ist in einer geeigneten Notation bzw. einem geeigneten Format hinterlegt und abgespeichert, z.B. IFC (Industry Foundation Classes) .

Beim Positionsbestimmungssystem IPS kann es sich um ein Satelliten gestütztes Positionsbestimmungssystem handeln (z.B. GPS) und/oder um ein Indoor-Positionsbestimmungssystem, das z.B. auf WLAN oder Bluetooth BT basiert.

Der Abgleich der Position des Netzwerkknotens IoT1 - IoT4 und der Position des mobilen Kommunikationsendgerätes kann durch den Netzwerkknoten IoT1 - IoT4, durch den Server (BIM-Server) oder durch das mobile Kommunikationsendgerät SMART erfolgen. Dazu sind der Netzwerkknoten IoT1 - IoT4, der Server (BIM-Server) und das mobile Kommunikationsendgerät SMART mit entsprechender Verarbeitungslogik ausgestattet.

Mit Vorteil ist der Netzwerkknoten IoT1 - IoT4 dazu eingerichtet, dass nach erfolgter Autorisierung ein Schreibzugriff auf einen Speicher M des autorisierten Netzwerkknotens möglich ist. Der Schreibzugriff kann z.B. durch weitere Netzwerkknoten des IP-Netzwerkes erfolgen, und/oder über das mobile Kommunikationsendgerät SMART, und/oder durch den Server (BIM-Server). Beim Schreibzugriff kann es sich z.B. um ein Firmware-Update oder um ein Update von Betriebsparametern des IoT-Geräts handein. Beim Speicher M kann es sich z.B. um einen Flash-Speicher handeln.

Beim beispielhaften System gemäss Figur 2 ist ein Netzwerkknoten IoT1 - IoT4, PANEL dazu eingerichtet, dass er eine Kommunikation nur durchführen kann, wenn die Position POS_{BIM} des Netzwerkknotens IoT1 - IoT4 und die Position POS_{IPS} eines definierten (mit Vorteil zertifizierten) mobilen Kommunikationsendgerätes SMART (z.B. Smartphone) im Wesentlichen übereinstimmen, d.h. wenn sich beide Geräte in unmittelbarer Nähe befinden (z.B. innerhalb eines Abstandes von höchstens 5m, insbesondere höchstens 3m). Mit Vorteil handelt es sich beim Netzwerkknoten IoT1 - IoT4, PANEL um ein IoT-Gerät, das über eine IP-Verbindung (Verbindung basierend auf dem Internet Protocol) mit anderen Geräten bzw. mit dem Internet verbunden ist.

Im beispielhaften System gemäss Figur 2 erhält das IoT-Gerät IoT1 erst dann eine Autorisierung GRANT für eine Kommunikation (z.B. Firmware-Update FW), wenn sich das mobile Kommunikationsendgerät SMART in unmittelbarer räumlicher Nähe (z.B. innerhalb eines Abstandes von 5m, insbesondere 3m) des Gerätes IoT1 befindet. In der Darstellung gemäss Figur 2 ist die räumlichen Nähe durch die gestrichelte Linie dargestellt, innerhalb derer sich das mobile Kommunikationsendgerät SMART und das IoT-Gerät IoT1 befinden.

In der Darstellung gemäss Figur 2 wird das Positionsbestimmungssystem IPS durch Positioning Beacons PB1 - PB4 gebildet, die jeweils ihre jeweilige Identifikation ID1 - ID4 aussenden. Die jeweilige ID1 - ID4 wird vom mobilen Kommunikationsendgerät SMART erfasst, z.B. über eine Bluetooth BT Verbindung (mit Vorteil BLE, Bluetooth Low Energy). Basierend auf der jeweiligen, vom mobilen Kommunikationsendgerät SMART empfangenen Identifikation ID1 - ID4 bestimmt das mobilen Kommunikationsendgerät SMART seine jeweilige geographische Position POS_{IPS}. Die Identifikation ID1 - ID4 kann auch direkt die geographische Ortsposition des jeweiligen Beacons PB1 - PB4 enthalten.

Das mobile Kommunikationsendgerät SMART umfasst eine entsprechende App APP zum Empfangen der jeweiligen Identifikation *ID1 - *ID4 der jeweiligen Beacons PB1 - PB4. Mit Vorteil sind die jeweiligen Identifikationen *ID1 - *ID4 geeignet verschlüsselt.

Weiterhin befindet sich die Firmware FW, die auf das Gerät I-oT1 hochgeladen (Upload, Update) werden soll, auf dem mobilen Kommunikationsendgerät SMART. Auf dem Display DIS des mobilen Kommunikationsendgerätes SMART kann ein Benutzer (z.B. ein Inbetriebsetzer oder ein Wartungstechniker) entsprechende Bedieneingaben durchführen.

Das mobile Kommunikationsendgerät SMART sendet über eine entsprechende IP-Verbindung IP1 (Internet Protokoll Verbindung) eine Anforderung (Request) REQ für ein Update (REQ for UPDATE(Iotn)) für das entsprechende Gerät IoTn an eine Cloud Service Application CSA, die durch eine Cloud-Infrastruktur CLOUD realisiert ist. Die Cloud Service Application CSA erhält den Request REQ und die Firmware FW, die auf das entsprechende Gerät IoTn geladen werden soll.

Im beispielhaften System gemäss Figur 2 sendet das mobile Kommunikationsendgerät SMART die jeweilige Identifikation *IDn des entsprechenden Beacons PB1 - BP4, in dessen geographischer Nähe sich das mobile Kommunikationsendgerät SMART befindet an den IPS-Server, der sich auch in der Cloud-Infrastruktur CLOUD befindet. Mit Vorteil wird die Identifikation *IDn verschlüsselt an den IPS-Server übermittelt, in dem diese zur weiteren Verarbeitung entschlüsselt wird. Die Identifikation *IDn kann z.B. durch eine asysmetrische Kryptografie verschlüsselt werden.

Der IPS-Server hat Zugriff auf eine Karte MAP mit den Ortsinformationen, d.h. den Verbauungsorten der jeweiligen Positioning Beacons PB1 - PB4. Über die jeweilige Identifikation *IDn kann der IPS-Server die Ortsposition des jeweiligen Beacons PB1 - PB4 bestimmen und der Cloud Service Application CSA bereitstellen. Mit Vorteil befindet sich die Karte MAP in einem geeigneten Format in einer Datenbank DB2.

Die Cloud Service Application CSA sendet eine Anforderung REQ_{POS(IoTn)} an den BIM-Server, um die Position des entsprechenden Gerätes IoTn, für das das Firmware-Update erfolgen soll, zu erhalten. Der BIM-Server greift auf die Datenbank DB mit dem Gebäudemodell (BIM) zu und stellt der Cloud Service Application CSA die Position POS_{BIM} des entsprechenden Gerätes IoTn zur Verfügung.

Die Cloud Service Application CSA vergleicht die Ortsposition POS_{IPS} des mobilen Kommunikationsendgerätes SMART mit der vom BIM-Server gelieferten Position POS_{BIM} des entsprechenden Gerätes IoTn, auf das der Firmware-Update FW erfolgen soll. Stimmen die beiden Positionen im Wesentlichen überein, gibt die Cloud Service Application CSA eine Bewilligung bzw. Autorisierung GRANT für eine Kommunikation über die IP-Verbindung IP2 an das entsprechende Gerät IoTn. Die Cloud Service Application CSA kann über ein Gateway GW auf das IP-Netz für die IP-Verbindung IP2 zugreifen oder aber auch direkt auf das entsprechende IoT-Gerät IoT1 - IoT4.

Das Firmware-Update FW bzw. der Firmware-Upload kann auf das entsprechende IoT-Gerät IoT1 - IoT4 (in der beispielhaften Darstellung gemäss Figur 2 das Gerät IoT1) von der Cloud-Infrastruktur CLOUD erfolgen, über die IP-Verbindung IP2 oder vom mobilen Kommunikationsendgerät SMART auf das IoT-Gerät I-oT1, z.B. durch eine NFC-Verbindung (Nahfeldkommunikation, Near Field Communication) zwischen dem mobilen Kommunikationsendgerät SMART und dem IoT-Gerät IoT1. Eine NFC-Verbindung (Nahfeldkommunikation, Near Field Communication) zwischen dem mobilen Kommunikationsendgerät SMART und dem IoT-Gerät IoT1 kann z.B. über Bluetooth oder RFID (Radio Frequency Identification) erfolgen.

Die Cloud Service Application CSA, der BIM-Server und der IPS-Server können physikalisch in einem Computer realisiert sein. Bei den IP-Verbindungen IP1, IP2 handelt es sich mit Vorteil um funkbasierte Verbindungen (z.B. WLAN).

Bei der beispielhaften Darstellung gemäss Figur 2 ist das IoT-Gerät IoT1 ein Brandmelder, der mit anderen Geräten IoT1 - I-oT4 über eine Melderlinie ML mit einer entsprechenden Kontrollstation oder Brandmeldezentrale PANEL (z.B. FS20-Zentrale) verbunden ist. Eine Alarmmeldung AL kann somit über die Melderlinie ML von einem Gerät IoT1 - IoT4 bis zur Zentrale PANEL weitergeleitet werden.

Zu den beispielhaften Systemen gemäss Figur 1 und Figur 2 ist anzumerken, dass die Komponenten der Cloud-Infrastruktur CLOUD zwar virtuell unterschiedliche Komponenten sind, diese aber in einem Computer (z.B. ein Cloud-Server) implementiert bzw. realisiert sein können. BIM-Server, CSA (Cloud Service Application) und IPS-Server sind zwar virtuell unterschiedliche Komponenten oder Module. Implementiert und realisiert können sie auf einem (einzigen) Computer werden, oder auf einem (auch verteilbaren) Computersystem. Die Datenbanken DB1, DB2 können z.B. jeweils als In-Memory Datenbank (z.B. Hana) realisiert werden, dadurch sind u.a. schnelle Zugriffszeiten möglich, was eine schnelle Autorisierung und somit auch z.B. einen schnellen Firmware-Update ermöglicht.

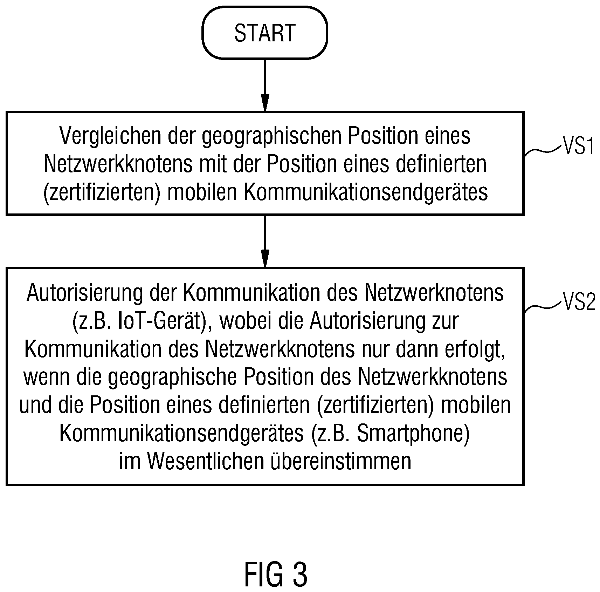

Figur 3 zeigt ein beispielhaftes Flussdiagramm für ein Verfahren Autorisierung der Kommunikation (z.B. Datenverbindung, Daten senden oder empfangen) eines Netzwerkknotens (z.B. IoT-Gerät) eines Kommunikationsnetzwerkes (z.B. IP-Netzwerk), wobei die Autorisierung zur Kommunikation des Netzwerkknotens nur dann erfolgt, wenn die geographische Position des Netzwerkknotens und die Position eines definierten (zertifizierten) mobilen Kommunikationsendgerätes (z.B. Smartphone) im Wesentlichen übereinstimmen.

Mit Vorteil ist die Position des Netzwerkknotens in einem Gebäudemodell auf einem Server hinterlegt ist, und die Position des mobilen Kommunikationsendgerätes wird über ein Positionsbestimmungssystem (z.B. Indoor-Positionsbestimmungssystem) ermittelt.

Die Überprüfung und der Abgleich der Positionen kann auf dem Server erfolgen. Die Überprüfung und der Abgleich der Positionen kann aber auch auf dem Netzwerkknoten oder dem mobilen Kommunikationsendgerät (z.B. Smartphone) erfolgen.

Mit Vorteil ist das mobile Kommunikationsendgerät dazu eingerichtet, dass die Überprüfung der Position von Netzwerkknoten und mobilen Kommunikationsendgerät über eine NFC-Verbindung (z.B. RFID, Bluetooth) zwischen dem Netzwerkknoten und dem mobilen Kommunikationsendgerät erfolgt.

Mit Vorteil stimmen während der Dauer einer Kommunikation die Position des Netzwerkknotens und die Position des mobilen Kommunikationsendgerätes im Wesentlichen überein.

Mit Vorteil erhält das mobile Kommunikationsendgerät eine Zertifizierung (Token, Zertifikat; eigentlich Zertifizierung zur Autorisierung) durch einen Zertifizierungsserver (mit Vorteil vertrauenswürdigen Server).

Mit Vorteil wird nur nach einer erfolgten Autorisierung ein Schreibzugriff auf einen Speicher (z.B. Flash-Speicher) des autorisierten Netzwerkknotens erlaubt. Ein Schreibzugriff kann z.B. über weitere Netzwerkknoten oder über das mobile Kommunikationsendgerät erfolgen.

Im Prinzip beruht das erfinderische Verfahren auf den Verfahrensschritten:
(VS1) Vergleichen der geographischen Position eines Netzwercknotens mit der Position eines definierten (zertifizierten) mobilen Kommunikationsendgerätes; und
(VS2) Autorisierung der Kommunikation des Netzwerkknotens (z.B. IoT-Gerät), wobei die Autorisierung zur Kommunikation des Netzwerkknotens nur dann erfolgt, wenn die geographische Position des Netzwerkknotens und die Position eines definierten (zertifizierten) mobilen Kommunikationsendgerätes (z.B. Smartphone) im Wesentlichen übereinstimmen.

Diese Verfahrensschritte können durch eine sowieso schon in einem Gebäude vorhandene Infrastruktur realisiert werden.

Zum Schützen einer IoT-Infrastruktur (Internet of Things, Internet der Dinge) ist bekanntlich eine umfassende Sicherheitsstrategie erforderlich. Diese Strategie muss folgende Bereiche abdecken: das Sichern von Daten in der Cloud, das Schützen der Integrität der Daten bei der Übertragung über das öffentliche Internet sowie das sichere Bereitstellen von Geräten. Jede Ebene leistet ihren eigenen Beitrag zur Sicherheit der Gesamtinfrastruktur, und die Beiträge bauen aufeinander auf und ergänzen sich.

Die gravierendsten Angriffe gegen die IoT-Infrastruktur selbst beginnen mit einem direkten datentechnischen Zugriff auf die IoT-Geräte vor Ort in der direkten Umgebung des jeweiligen I-oT-Geräts.

Die vorliegende Erfindung verhindert insbesondere einen direkten datentechnischen Zugriff von aussen auf die IoT-Geräte.

Erfindungsgemäss erfolgt ein datentechnischer Zugriff (direkt oder über den Server bzw. die Zentrale) auf das IoT-Gerät nur dann, wenn im BIM (für Building Information Modelling) die Position des Geräts im Gebäude mit der Position des autorisierten Servicetechniker bzw. mit der Position des Smartphones des Servicetechnikers im Gebäude übereinstimmen. Hierzu wird die verbaute Position des Geräts in BIM mit der Position des Smartphones des Servicetechnikers z.B. über das IPS (Indoor Positioning System) verglichen. Wenn eine räumliche Nähe festgestellt ist, wird der Zugriff freigegeben, sodass im IoT-Gerät z.B. externe Daten in einem gesicherten Speicherbereich ablegen werden können. Die externen Daten können direkt vom Smartphone oder vorzugsweise über den Server bzw. über die Cloud in den gesicherten Speicherbereich des IoT-Geräts übertragen werden.

Zur weiteren Erhöhung der Sicherheit werden die von den Positioning Beacons ausgesendeten ID-Codes verschlüsselt an einen IPS-Server in der Cloud übertragen, wie z.B. mittels eines Rolling Codes. Dadurch ist die aktuelle Position in einem Gebäude nicht direkt durch das Smartphone selbst ermittelbar, sondern nur durch den IPS-Server. Ein "Vorgaukeln" einer Position in einem Gebäude ist somit nicht möglich.

Durch das erfindungsgemässe Verfahren ist ein erhöhtes Mass an Sicherheit für den Zugriff auf den gesicherten Speicherbereich eines IoT-Gerätes möglich. Neben der virtuellen Komponente (IP-Zugriff) ist eine physische Komponente (Standort) erforderlich, um die Datenübermittlung zu aktivieren. Der physische Zugang zum Gerät kann zudem weiter durch Zutrittskontrollsysteme gesichert werden.

So ist es bei einem Hackerangriff auf den IoT-Cloudserver (mit den BIM-Daten) dennoch keine Manipulation des verbauten IoT-Devices möglich.

Weiterhin ist auch bei einem Hackerangriff direkt auf das IoT-Device keine Manipulation möglich, da ein schreibender Zugriff nur über die Freigabe des Cloudservers, wie z.B. durch den Cloudserver selbst, möglich ist.

Durch das erfindungsgemässe Verfahren und den gesicherten Zugriff auf den Cloudserver (z.B. PKI-Login) müssen künftig keine Passwörter mehr eingegeben oder komplizierte Konfigurationen vorgenommen werden.

Verfahren und System zur Autorisierung der Kommunikation (z.B. Datenverbindung) eines Netzwerkknotens (z.B. IoT-Gerät) eines Kommunikationsnetzwerkes (z.B. IP-Netzwerk), wobei die Autorisierung zur Kommunikation des Netzwerkknotens nur dann erfolgt, wenn die geographische Position des Netzwerkknotens und die Position eines definierten (zertifizierten) mobilen Kommunikationsendgerätes (z.B. Smartphone) im Wesentlichen übereinstimmen.

### Bezugszeichen

- IPS: Positionsbestimmungssystem
- BIM: Gebäudemodell
- POS, POS_{BIM}, POS_{IPS}: Positionsdaten
- REQ: Anforderung
- DB1, DB2: Datenbank
- FW: Firmware
- GRANT: Bewilligung
- CLOUD: Cloud-Infrastruktur
- CSA: Cloud Service Application
- GW: Gateway
- IoT1 - IoT4: IoT-Gerät
- PANEL: Steuer- und Bedienpanel
- ML: Melderlinie
- AL: Alarm
- BAT: Batterie
- M: Speicher
- SMART: Mobiles Kommunikationsendgerät
- DIS: Display
- APP: Applikationsprogramm
- IP1, IP2: IP-Verbindung
- BT: Bluetooth-Verbindung
- PB1 - PB4: Positioning Beacon
- ID1 - ID4: Identifikation (ID)
- *ID1 - *ID4, *IDn: Identifikation (ID)
- MAP: Karte
- VS1, VS1: Verfahrensschritt

## Patentansprüche

1. Verfahren zur Autorisierung der Kommunikation eines Netzwerkknotens (IoT1 - IoT4, PANEL) eines Kommunikationsnetzwerkes (IP2), wobei die Autorisierung zur Kommunikation des Netzwerkknotens (IoT1 - IoT4, PANEL) nur dann erfolgt, wenn die geographische Position (POS_{BIM}) des Netzwerkknotens (IoT1 - I-oT4, PANEL) und die Position (POS, POS_{IPS}) eines definierten mobilen Kommunikationsendgerätes (SMART) im Wesentlichen übereinstimmen, wobei die Position (POS_{BIM}) des Netzwerkknotens (I-oT1 - IoT4, PANEL) in einem Gebäudeinformationsmodell (BIM) auf einem Server (BIM-Server) hinterlegt ist, wobei die Position (POS, POS_{IPS}) des mobilen Kommunikationsendgerätes (SMART) über ein Positionsbestimmungssystem (IPS) ermittelt wird, wobei die im Gebäudeinformationsmodell (BIM) hinterlegte Position (POS_{BIM}) des Netzwerkknotens (IoT1 - IoT4, PANEL) mit der Position (POS, POS_{IPS}) des definierten mobilen Kommunikationsendgerätes (SMART) durch den Netzwerkknoten (IoT1 - IoT4, PANEL) oder das definierte mobile Kommunikationsendgerät (SMART) verglichen wird, und basierend darauf der Netzwerkknoten (IoT1 - IoT4, PANEL) nur dann autorisiert ist eine Kommunikation durchzuführen, wenn sich das definierte mobile Kommunikationsendgerät (SMART) geographisch in einem Abstand von höchstens 3m zum entsprechenden Netzwerkknoten (IoT1 - IoT4, PANEL) befindet.

2. Verfahren nach Anspruch 1, wobei der Server (BIM-Server, CSA) dazu eingerichtet ist, dass die Überprüfung der Position auf dem Server (BIM-Server, CSA) erfolgt.

3. Verfahren nach einem der vorstehenden Ansprüche, wobei der Netzwerkknoten (IoT1 - IoT4, PANEL) dazu eingerichtet ist, dass die Überprüfung der Position (POS, POS_{BIM}, POS_{IPS}) im oder durch den Netzwerkknoten (IoT1 - IoT4, PANEL) erfolgt.

4. Verfahren nach einem der vorstehenden Ansprüche, wobei das mobile Kommunikationsendgerät (SMART) dazu eingerichtet ist, dass die Überprüfung der Position (POS, POS_{BIM}, POS_{IPS}) im mobilen Kommunikationsendgerät (SMART) erfolgt.

5. Verfahren nach einem der vorstehenden Ansprüche, wobei das mobile Kommunikationsendgerät (SMART) zur Überprüfung der Position (POS, POS_{BIM}, POS_{IPS}) dazu eingerichtet ist, dass die Überprüfung der Position (POS, POS_{BIM}, POS_{IPS}) von Netzwerkknoten (IoT1 - IoT4, PANEL) und mobilen Kommunikationsendgerät (SMART) über eine NFC-Verbindung zwischen dem Netzwerkknoten (IoT1 - IoT4, PANEL) und dem mobilen Kommunikationsendgerät (SMART) erfolgt.

6. Verfahren nach einem der vorstehenden Ansprüche, wobei während der Dauer einer Kommunikation die Position des Netzwercknotens (IoT1 - IoT4, PANEL) und die Position (POS, POS_{IPS}) des mobilen Kommunikationsendgerätes (SMART) im Wesentlichen übereinstimmen.

7. Verfahren nach einem der vorstehenden Ansprüche, wobei das mobile Kommunikationsendgerät (SMART) eine Zertifizierung durch einen Zertifizierungsserver erhält.

8. Verfahren nach einem der vorstehenden Ansprüche, wobei nur nach einer erfolgten Autorisierung ein Schreibzugriff auf einen Speicher (M) des autorisierten Netzwerkknotens (IoT1 - I-oT4, PANEL) erlaubt wird.

9. System zur Autorisierung der Kommunikation eines Netzwercknotens (IoT1 - IoT4, PANEL) eines Kommunikationsnetzwerkes (IP2), wobei der Netzwerkknoten (IoT1 - IoT4, PANEL) dazu eingerichtet ist, dass eine Autorisierung zur Kommunikation des Netzwerkknotens (IoT1 - IoT4, PANEL) nur dann erfolgt, wenn die geographische Position (POS_{BIM}) des Netzwerkknotens (IoT1 - IoT4, PANEL) und die Position (POS, POS_{IPS}) eines definierten mobilen Kommunikationsendgerätes (SMART) im Wesentlichen übereinstimmen, wobei das System weiter umfasst:
einen Server (BIM-Server), auf dem ein Gebäudeinformationsmodell (BIM) mit der Position (POS_{BIM}) des Netzwerkknotens (IoT1 - IoT4, PANEL) hinterlegt ist; und
ein Positionsbestimmungssystem (IPS) zur Bestimmung der Position (POS, POS_{IPS}) des mobilen Kommunikationsendgerätes (SMART),
wobei die im Gebäudeinformationsmodell (BIM) hinterlegte Position (POS_{BIM}) des Netzwerkknotens (IoT1 - IoT4, PANEL) mit der Position (POS, POS_{IPS}) des definierten mobilen Kommunikationsendgerätes (SMART) durch den Netzwerkknoten (IoT1 - IoT4, PANEL) oder das definierte mobile Kommunikationsendgerät (SMART) verglichen wird, und basierend darauf der Netzwerkknoten (IoT1 - IoT4, PANEL) nur dann autorisiert ist eine Kommunikation durchzuführen, wenn sich das definierte mobile Kommunikationsendgerät (SMART) geographisch in einem Abstand von höchstens 3m zum entsprechenden Netzwerkknoten (IoT1 - IoT4, PANEL) befindet.

10. System nach Anspruch 9, wobei der Netzwerkknoten (IoT1 - IoT4, PANEL) und/oder der Server (BIM-Server, CSA) und/oder das mobile Kommunikationsendgerät (SMART) für die Überprüfung der Positionen (POS, POS_{BIM}, POS_{IPS}) eingerichtet sind.

11. System nach einem der vorherigen Ansprüche 9 oder 10, wobei der Netzwerkknoten (IoT1 - IoT4, PANEL) nach erfolgter Autorisierung dazu eingerichtet ist, einen Schreibzugriff auf einen Speicher (M) dieses autorisierten Netzwerkknotens (IoT1 - IoT4, PANEL) zu erlauben.

12. Netzwerkknoten (IoT1 - IoT4, PANEL) eines Kommunikationsnetzwerkes (IP2), wobei der Netzwerkknoten (IoT1 - IoT4, PANEL) dazu eingerichtet ist, dass er eine Kommunikation nur durchführen kann, wenn die Position (POS_{BIM}) des Netzwerkknotens (IoT1 - IoT4, PANEL) und die Position (POS, POS_{IPS}) eines definierten mobilen Kommunikationsendgerätes (SMART) im Wesentlichen übereinstimmen, wobei auf einem Server (BIM-Server) ein Gebäudeinformationsmodell (BIM) mit der Position (POS_{BIM}) des Netzwerkknotens (IoT1 - IoT4, PANEL) hinterlegt ist, die Position (POS, POS_{IPS}) des definierten mobilen Kommunikationsendgerätes (SMART) über ein Positionsbestimmungssystem (IPS) ermittelt wird und die im Gebäudeinformationsmodell (BIM) hinterlegte Position (POS_{BIM}) des Netzwerkknotens (IoT1 - IoT4, PANEL) mit der Position (POS, POS_{IPS}) des definierten mobilen Kommunikationsendgerätes (SMART) durch den Netzwerkknoten (IoT1 - IoT4, PANEL) verglichen wird, und basierend darauf der Netzwerkknoten (IoT1 - IoT4, PANEL) nur dann autorisiert ist eine Kommunikation durchzuführen, wenn sich das definierte mobile Kommunikationsendgerät (SMART) geographisch in einem Abstand von höchstens 3m zum entsprechenden Netzwerkknoten (IoT1 - IoT4, PANEL) befindet.

13. Netzwerkknoten (IoT1 - IoT4, PANEL) nach Anspruch 12, wobei es sich beim Netzwerkknoten (IoT1 - IoT4, PANEL) um ein IoT-Gerät handelt.

14. Netzwerkknoten (IoT1 - IoT4, PANEL) nach Anspruch 12 oder 13, wobei der Netzwerkknoten (IoT1 - IoT4, PANEL) nach erfolgter Autorisierung dazu eingerichtet ist, einen Schreibzugriff auf einen Speicher (M) dieses autorisierten Netzwerkknotens (IoT1 - IoT4, PANEL) zu erlauben.

## Claims

1. Method for authorising the communication of a network node (IoT1 - IoT4, PANEL) of a communication network (IP2), wherein the authorisation for communication of the network node (IoT1 - IoT4, PANEL) only then takes place if the geographic position (POS_{BIM}) of the network node (IoT1 - IoT4, PANEL) and the position (POS, POS_{IPS}) of a defined mobile communication terminal (SMART) essentially match, wherein the position (POS_{BIM}) of the network node (IoT1 - IoT4, PANEL) in a building information model (BIM) is stored on a server (BIM server), wherein the position (POS, POS_{IPS}) of the mobile communication terminal (SMART) is determined by way of a position determination system (IPS), wherein the position (POS_{BIM}) of the network node (IoT1 - IoT4, PANEL) stored in the building information model (BIM) is compared with the position (POS, POS_{IPS}) of the defined mobile communication terminal (SMART) by means of the network node (IoT1 - IoT4, PANEL) or the defined mobile communication terminal (SMART), and on this basis
the network node (IoT1 - IoT4, PANEL) is only then authorised to carry out a communication if the defined mobile communication terminal (SMART) is located geographically at a distance of at most 3m from the corresponding network node (IoT1 - IoT4, PANEL).

2. Method according to claim 1, wherein the server (BIM server, CSA) is configured so that verification of the position takes place on the server (BIM server, CSA).

3. Method according to one of the preceding claims, wherein the network node (IoT1 - IoT4, PANEL) is configured so that verification of the position (POS, POS_{BIM}, POS_{IPS}) takes place in or by means of the network node (IoT1 - IoT4, PANEL).

4. Method according to one of the preceding claims, wherein the mobile communication terminal (SMART) is configured so that verification of the position (POS, POS_{BIM}, POS_{IPS}) takes place in the mobile communication terminal (SMART).

5. Method according to one of the preceding claims, wherein the mobile communication terminal (SMART) is configured to verify the position (POS, POS_{BIM}, POS_{IPS}) so that verification of the position (POS, POS_{BIM}, POS_{IPS}) of network node (IoT1 - IoT4, PANEL) and mobile communication device (SMART) takes place by way of an NFC connection between the network node (IoT1 - IoT4, PANEL) and the mobile communication terminal (SMART).

6. Method according to one of the preceding claims, wherein during the duration of a communication the position of the network node (IoT1 - IoT4, PANEL) and the position (POS, POS_{IPS}) of the mobile communication terminal (SMART) essentially match.

7. Method according to one of the preceding claims, wherein the mobile communication terminal (SMART) receives a certification by way of a certification server.

8. Method according to one of the preceding claims, wherein a write access to a memory (M) of the authorised network node (IoT1 - IoT4, PANEL) is only permitted following a completed authorisation.

9. System for authorising the communication of a network node (IoT1 - IoT4, PANEL) of a communication network (IP2), wherein the network node (IoT1 - IoT4, PANEL) is configured so that authorisation for communication of the network node (IoT1 - IoT4, PANEL) only then takes place if the geographic position (POS_{BIM}) of the network node (IoT1 - IoT4, PANEL) and the position (POS, POS_{IPS}) of a defined mobile communication terminal (SMART) essentially match, wherein the system further comprises:
a server (BIM server), on which a building model (BIM) is stored with the position (POS_{BIM}) of the network node (IoT1 - IoT4, PANEL); and
a position determination system (IPS) for determining the position (POS, POS_{IPS}) of the mobile communication terminal (SMART)
wherein
the position (POS_{BIM}) of the network node (IoT1 - IoT4, PANEL) stored in the building information model (BIM) is compared with the position (POS, POS_{IPS}) of the defined mobile communication terminal (SMART) by means of the network node (IoT1 - IoT4, PANEL) or the defined mobile communication terminal (SMART), and on this basis
the network node (IoT1 - IoT4, PANEL) is only then authorised to carry out a communication if the defined mobile communication terminal (SMART) is located geographically at a distance of at most 3m from the corresponding network node (IoT1 - IoT4, PANEL).

10. System according to claim 9, wherein the network node (IoT1 - IoT4, PANEL) and/or the server (BIM server, CSA) and/or the mobile communication terminal (SMART) are configured for checking the positions (POS, POS_{BIM}, POS_{IPS}).

11. System according to one of the preceding claims 9 or 10, wherein following completed authorisation the network node (IoT1 - IoT4, PANEL) is configured to allow a write access to a memory (M) of this authorised network node (IoT1 - IoT4, PANEL).

12. Network node (IoT1 - IoT4, PANEL) of a communication network (IP2), wherein the network node (IoT1 - IoT4, PANEL) is configured so that it can only carry out a communication if the position (POS_{BIM}) of the network node (IoT1 - IoT4, PANEL) and the position (POS, POS_{IPS}) of a defined mobile communication terminal (SMART) essentially match, wherein a building information model (BIM) with the position (POS_{BIM}) of the network node (IoT1 - IoT4, PANEL) is stored in a server (BIM server), the position (POS, POS_{IPS}) of the defined mobile communication device (SMART) is determined by way of a position determination system (IPS) and the position (POS_{BIM}) of the network node (IoT1 - IoT4, PANEL) stored in the building information model (BIM) is compared with the position (POS, POS_{IPS}) of the defined mobile communication device (SMART) by means of the network node (IoT1 - IoT4, PANEL) and on this basis
the network node (IoT1 - IoT4, PANEL) is only then authorised to carry out a communication if the defined mobile communication terminal (SMART) is located geographically at a distance of at most 3m from the corresponding network node (IoT1 - IoT4, PANEL).

13. Network node (IoT1 - IoT4, PANEL) according to claim 12, wherein the network node (IoT1 - IoT4, PANEL) is an IoT device.

14. Network node (IoT1 - IoT4, PANEL) according to claim 12 or 13, wherein following completed authorisation the network node (IoT1 - IoT4, PANEL) is configured to allow a write access to a memory (M) of this authorised network node (IoT1 - IoT4, PANEL).

## Revendications

1. Procédé d'autorisation de communication d'un noeud de réseau (IoT1 - IoT4, PANEL) d'un réseau de communication (IP2), dans lequel l'autorisation de communication du noeud de réseau (IoT1 - IoT4, PANEL) n'a lieu que si la position géographique (POS_{BIM}) du noeud de réseau (IoT1 - IoT4, PANEL) et la position (POS, POS_{IPS}) d'un appareil de communication mobile défini(SMART) correspondent fondamentalement, dans lequel la position (POS_{BIM}) du noeud de réseau (IoT1 - IoT4, PANEL) est enregistrée dans une modélisation de données de bâtiment (BIM) sur un serveur (BIM-Server), la position (POS, POS_{IPS}) de l'appareil de communication mobile (SMART) étant communiquée via un système de positionnement (IPS), où la position (POS_{BIM}) du noeud de réseau (IoT1 - IoT4, PANEL) enregistrée dans la modélisation de données du bâtiment (BIM) est comparée à la position (POS, POS_{IPS}) de l'appareil de communication mobile défini (SMART) par le noeud de réseau (IoT1 - IoT4, PANEL) ou par l'appareil de communication mobile défini (SMART), et en fonction de cela, le noeud de réseau (IoT1 - IoT4, PANEL) n'est autorisé à établir une communication que si l'appareil de communication mobile défini (SMART) se trouve géographiquement à une distance de maximum 3m du noeud de réseau (IoT1 - IoT4, PANEL) correspondant.

2. Procédé selon la revendication 1 dans lequel le serveur (BIM-Server, CSA) est conçu pour que la vérification de position se fasse sur le serveur (BIM-Server, CSA).

3. Procédé selon l'une des revendications précédentes dans lequel le noeud de réseau (IoT1 - IoT4, PANEL) est conçu pour que la vérification de position (POS, POS_{BIM}, POS_{IPS}) se fasse dans ou via le noeud de réseau (IoT1 - IoT4, PANEL).

4. Procédé selon l'une des revendications précédentes dans lequel l'appareil de communication mobile (SMART) est conçu pour que la vérification de position (POS, POS_{BIM}, POS_{IPS}) se fasse dans l'appareil de communication mobile (SMART).

5. Procédé selon l'une des revendications précédentes dans lequel l'appareil de communication mobile (SMART) pour que la vérification de position (POS, POS_{BIM}, POS_{IPS}) est conçu de sorte que la vérification de position (POS, POS_{BIM}, POS_{IPS}) de noeud de réseau (IoT1 - IoT4, PANEL) et d'appareil de communication mobile (SMART) se fasse sur une liaison NFC entre le noeud de réseau (IoT1 - IoT4, PANEL) et l'appareil de communication mobile (SMART).

6. Procédé selon l'une des revendications précédentes dans lequel la position du noeud de réseau (IoT1 - IoT4, PANEL) et la position (POS, POS_{IPS}) de l'appareil de communication mobile (SMART) correspondent fondamentalement pendant la durée d'une communication.

7. Procédé selon l'une des revendications précédentes dans lequel l'appareil de communication mobile (SMART) reçoit une certification par un serveur de certification.

8. Procédé selon l'une des revendications précédentes, dans lequel ce n'est qu'après obtention d'une autorisation qu'un accès en écriture à une mémoire (M) du noeud de réseau (IoT1 - IoT4, PANEL) autorisé est permis.

9. Système d'autorisation de communication d'un noeud de réseau (IoT1 - IoT4, PANEL) d'un réseau de communication (IP2), dans lequel le noeud de réseau (IoT1 - IoT4, PANEL) est conçu pour qu'une autorisation de communication du noeud de réseau (IoT1 - IoT4, PANEL) n'est possible que si la position géographique (POS_{BIM}) du noeud de réseau (IoT1 - IoT4, PANEL) et la position (POS, POS_{IPS}) d'un appareil de communication mobile défini (SMART) correspondent fondamentalement, le système comprenant en outre :
un serveur (BIM-Server) sur lequel est enregistrée une modélisation de données de bâtiment (BIM) avec la position (POS_{BIM}) du noeud de réseau (IoT1 - IoT4, PANEL) ; et
un système de positionnement (IPS) pour déterminer la position (POS, POS_{IPS}) de l'appareil de communication mobile (SMART),
dans lequel la position (POS_{BIM}) enregistrée dans la modélisation de données de bâtiment (BIM) du noeud de réseau (IoT1 - IoT4, PANEL) est comparée à la position (POS, POS_{IPS}) de l'appareil de communication mobile défini (SMART) par le noeud de réseau (IoT1 - IoT4, PANEL) ou par l'appareil de communication mobile défini (SMART), et en fonction de cela, le noeud de réseau (IoT1 - IoT4, PANEL) n'est autorisé à établir une communication que si l'appareil de communication mobile défini (SMART) se trouve géographiquement à une distance de maximum 3m du noeud de réseau (IoT1 - IoT4, PANEL) correspondant.

10. Système selon la revendication 9, dans lequel le noeud de réseau (IoT1 - IoT4, PANEL) et/ou le serveur (BIM-Server, CSA) et/ou l'appareil de communication mobile (SMART) sont conçus pour vérifier les positions (POS, POS_{BIM}, POS_{IPS}).

11. Système selon l'une des revendications 9 ou 10, dans lequel le noeud de réseau (IoT1 - IoT4, PANEL) est conçu, après obtention d'une autorisation, pour permettre un accès en écriture sur une mémoire (M) de ce noeud de réseau autorisé (IoT1 - IoT4, PANEL).

12. Noeud de réseau (IoT1 - IoT4, PANEL) d'un réseau de communication (IP2), le noeud de réseau (IoT1 - IoT4, PANEL) étant conçu pour ne pouvoir établir une communication que si la position (POS_{BIM}) du noeud de réseau (IoT1 - IoT4, PANEL) et la position (POS, POS_{IPS}) d'un appareil de communication mobile défini (SMART) correspondent fondamentalement, dans lequel une modélisation de données de bâtiment (BIM) est enregistrée dans un serveur (BIM-Server) avec la position (POS_{BIM}) du noeud de réseau (IoT1 - IoT4, PANEL), la position (POS, POS_{IPS}) de l'appareil de communication mobile défini (SMART) est communiquée via un système de positionnement (IPS) et la position (POS_{BIM}) du noeud de réseau (IoT1 - IoT4, PANEL) enregistrée dans la modélisation de données de bâtiment (BIM) est comparée à la position (POS, POS_{IPS}) de l'appareil de communication mobile défini (SMART) par le noeud de réseau (IoT1 - IoT4, PANEL), et à partir de là, le noeud de réseau (IoT1 - IoT4, PANEL) n'est autorisé à établir une communication que si l'appareil de communication mobile défini (SMART) se trouve géographiquement à une distance de maximum 3m du noeud de réseau (IoT1 - IoT4, PANEL) correspondant.

13. Noeud de réseau (IoT1 - IoT4, PANEL) selon la revendication 12, dans lequel le noeud de réseau (IoT1 - IoT4, PANEL) est un appareil IoT.

14. Noeud de réseau (IoT1 - IoT4, PANEL) selon la revendication 12 ou 13, dans lequel le noeud de réseau (IoT1 - IoT4, PANEL) est conçu, après obtention d'une autorisation, pour permettre un accès en écriture sur une mémoire (M) de ce noeud de réseau autorisé (IoT1 - IoT4, PANEL).
